(19) Europäisches Patentamt
European Patent Office
Office européen des brevets

(11) EP 4 307 071 A1

(12) EUROPEAN PATENT APPLICATION
published in accordance with Art. 153(4) EPC

(43) Date of publication:
17.01.2024 Bulletin 2024/03

(51) International Patent Classification (IPC):
G05D 1/02 (2020.01)

(21) Application number: 21930350.0

(52) Cooperative Patent Classification (CPC):
G05D 1/02

(22) Date of filing: 17.12.2021

(86) International application number:
PCT/JP2021/046661

(87) International publication number:
WO 2022/190505 (15.09.2022 Gazette 2022/37)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 12.03.2021 JP 2021040298

(71) Applicant: OMRON Corporation
Kyoto 600-8530 (JP)

(72) Inventor: OSHIRO, Atsushi
Kyoto-shi, Kyoto 600-8530 (JP)

(74) Representative: Becker, Eberhard
Becker Kurig & Partner
Patentanwälte mbB
Bavariastraße 7
80336 München (DE)

(54) **CONTROL DEVICE AND TRANSPORT SYSTEM**

(57) Provided are a control device and a transport system, which are capable of suppressing environmental influence on an object to be transported by a transport robot. A control device (10) comprises a master storage unit (16) that stores map data including obstacle information and environment parameter information on an environment parameter that may influence an object to be transported, and a transport path determination unit (14) that uses a transport instruction and the map data to determine a transport path according to an object to be transported, which is indicated by transported object information included in the transport instruction, in consideration of the environment parameter that may influence the object to be transported.

FIG. 1

## Description

Technical Field

The present disclosure relates to a control device controlling a transport robot, and a transport system including the control device.

Related Art

There has been proposed a self-traveling transport robot such as an automated guided vehicle (AGV) or automated guided forklift (AGF) used in a factory, a warehouse or the like. A plurality of such transport robots are controlled by a control device through wireless communication, and a transport system that realizes automation of transportation in the factory or the like is constituted.

Prior-Art Documents

Patent Documents

Patent Document 1: Japanese Patent Laid-open No. 2013-225253

SUMMARY OF THE INVENTION

Problems to Be Solved by the Invention

However, in the conventional transport system as described above, the environment of an area such as the factory or warehouse, which may influence an object to be transported by the transport robot, has not been considered. Hence, in the related art, a problem may occur that environmental influence on the object to be transported cannot be suppressed during transportation by the transport robot.

The present disclosure has been made in view of the above problem, and an object thereof is to provide a control device and a transport system in which environmental influence on an object to be transported by a transport robot can be suppressed.

Means for Solving the Problems

The present disclosure adopts the following configurations in order to solve the above problems.

A control device according to one aspect of the present disclosure is a control device controlling a transport robot that travels within a predetermined area and transports an object to be transported. The control device includes: a master communication part, communicating with the transport robot; a storage part, storing map data containing obstacle information regarding an obstacle and environmental parameter information regarding an environmental parameter that may influence the object to be transported within the area; a transport instruction reception part, receiving a transport instruction regarding transportation of the object to be transported, the transport instruction containing transported object information indicating the object to be transported, transport source information indicating a transport source, and transport destination information indicating a transport destination; a transport path determination part, determining a transport path from the transport source to the transport destination of the object to be transported by the transport robot based on the transport instruction and the map data; and an instruction generator, giving the transport robot through the master communication part the transport instruction so that the transport robot transports the object to be transported in accordance with the transport path determined by the transport path determination part. The transport path determination part is configured to, according to the object to be transported that is indicated by the transported object information contained in the transport instruction, determine the transport path in consideration of the environmental parameter that influences the object to be transported.

A transport system according to one aspect of the present disclosure includes the above control device, and a transport robot provided with a traveling mechanism, a distance sensor that acquires distance information indicating a distance to an object existing within a monitoring area, an own position calculator that calculates own position information, a travel controller that controls the traveling mechanism using the distance information from the distance sensor and the own position information from the own position calculator, and a slave communication part that performs the communication.

Effects of the Invention

According to the present disclosure, a control device and a transport system can be provided in which environmental influence on an object to be transported by a transport robot can be suppressed.

BRIEF DESCRIPTION OF THE DRAWINGS

FIG. 1 is a block diagram illustrating a configuration of a main part of a transport system according to Embodiment 1 of the present disclosure.
FIG. 2 illustrates an outline example of a transport robot of the transport system according to Embodiment 1 of the present disclosure.
FIG. 3 is an area map schematically illustrating an example of an area where the transport system according to Embodiment 1 of the present disclosure is applied.
FIG. 4 illustrates a specific example of a movement direction of the transport robot of the transport system according to Embodiment 1 of the present disclosure.

FIG. 5 illustrates a specific example of a transport path of the transport robot of the transport system according to Embodiment 1 of the present disclosure.

## DESCRIPTION OF THE EMBODIMENTS

[Embodiment 1]

An embodiment (hereinafter also written as "the present embodiment") according to one aspect of the present invention is described below based on the drawings.

§1 Application Example

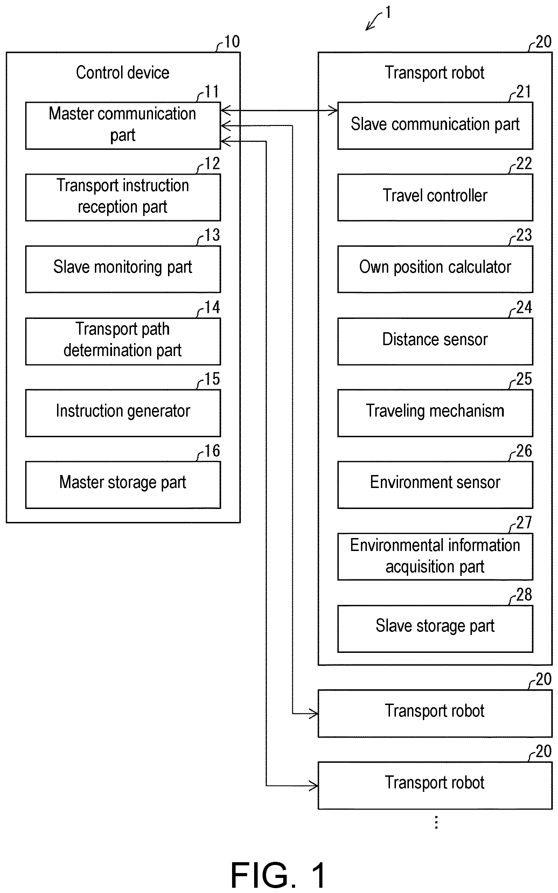

An example of a scene in which the present disclosure is applied is described with reference to FIG. 1. FIG. 1 is a block diagram illustrating a configuration of a main part of a transport system according to Embodiment 1 of the present disclosure. A transport system 1 includes a control device 10 and a plurality of self-traveling transport robots 20. The control device 10 communicates with the transport robots 20 and gives an instruction to each of the transport robots 20.

In FIG. 1, an internal configuration of one transport robot 20 is illustrated in detail. However, the other transport robots 20 have a similar internal configuration. The transport robot 20 includes a distance sensor 24 that detects a distance to an object around and outputs the distance as distance information, and an own position calculator 23 that calculates own position information regarding its own position by using the distance information.

The control device 10 controls the transport robot 20 that travels within a predetermined area and transports an object to be transported. The control device 10 also includes a master storage part 16 as a storage part that stores map data containing obstacle information and environmental parameter information within the area. The control device 10 also includes a transport instruction reception part 12 that receives a transport instruction from a host information processing system or the like, and a transport path determination part 14 that, based on the transport instruction and the map data, determines a transport path from a transport source to a transport destination of the object to be transported by the transport robot 20.

Furthermore, in the control device 10, according to the object to be transported that is indicated by transported object information contained in the transport instruction, the transport path determination part 14 determines the transport path in consideration of an environmental parameter that influences the object to be transported.

Thus, according to the present embodiment, the transport path of the transport robot 20 is determined in consideration of the environmental parameter that may influence the object to be transported by the transport robot 20, and environmental influence on the object to be transported by the transport robot 20 can be suppressed.

§2 Configuration Example

<Application Scene of Transport System 1>

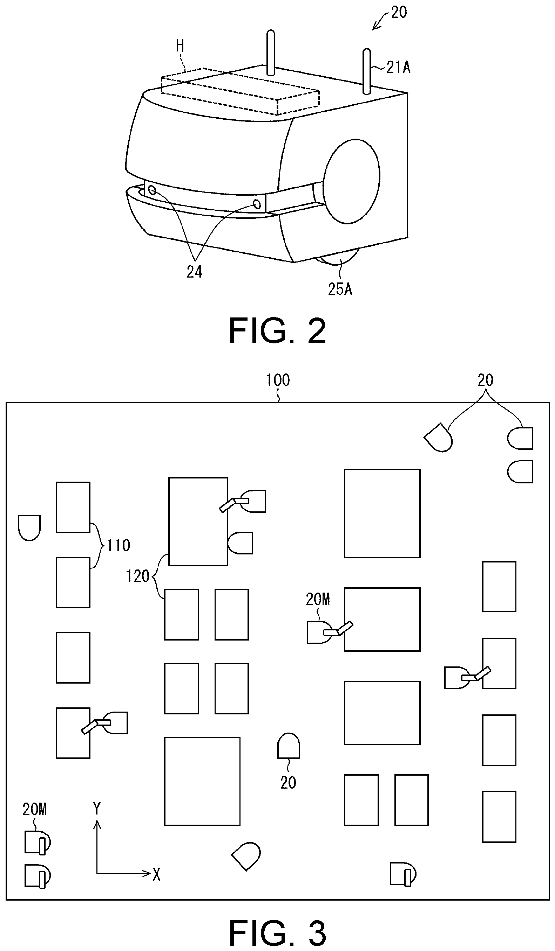

FIG. 2 illustrates an outline example of a transport robot of the transport system according to Embodiment 1 of the present disclosure. FIG. 3 is an area map schematically illustrating an example of an area where the transport system according to Embodiment 1 of the present disclosure is applied.

In a factory 100, the self-traveling transport robot 20 is disposed that transports an object H to be transported, such as a product, a semi-finished product, a part, a raw material, a tool, a jig, a packing material, or a cassette storing the foregoing. Furthermore, on a transport robot as a cart, a self-traveling transport robot 20M provided with a robot arm (manipulator) gripping the object H to be transported may be disposed as a portion of the transport system 1.

The transport robot 20M is an example of the transport robot 20, and is included in the transport robot 20 in the following description. The transport robot 20 may be in the form of an unmanned guided cart, an AGF, or a self-traveling transport device in other forms.

A shelf 110 on which the object H to be transported may be placed is installed in the factory 100. Also installed in the factory 100 are production facilities for performing machining, assembly, processing or inspection of, or using, the object H to be transported. The transport robot 20 of the transport system 1 may transport the object H to be transported between these facilities. As illustrated in FIG. 3, a position of each transport robot 20 is represented by XY coordinates defined on a floor of the factory 100 as the area.

The object H to be transported is, for example, a storage container storing a plurality of semiconductor wafers, or a storage container storing an intermediate product of a display element such as an organic electroluminescent (EL) panel. As indicated by dotted lines in FIG. 2, the object H to be transported is transported from the transport source to the transport destination by the transport robot 20 while being placed on an upper surface of the transport robot 20.

<Overview of Configuration of Transport System 1>

A relatively specific configuration example and operation of the transport system 1 will be described below. As illustrated in FIG. 1, the transport system 1 includes the control device 10 and the self-traveling transport robots 20. The control device 10 is an information processing system responsible for managing transportation and may also be called a transport system server (automated material handling system (AMHS) server) or the like.

Based on a command from the host information processing system or the like, the control device 10 transmits a relatively specific transport instruction to the transport robot 20 in the transport system 1. The control device 10 may be any information processing system that may execute such processing, and does not have to be a device physically housed in one housing.

In the case where a scene in which the transport system 1 is applied is a production factory, the host information processing system that manages production of products in the production factory may be called a manufacturing execution system server (MES server). If the scene in which the transport system 1 is applied is a distribution warehouse, the host information processing system that manages storage and delivery of stored goods in the distribution warehouse may be called a warehouse management system server (WMS server).

<Configuration of Transport Robot 20>

As illustrated in FIG. 1, the transport robot 20 includes a slave communication part 21, a travel controller 22, an own position calculator 23, a distance sensor 24, a traveling mechanism 25, an environment sensor 26, an environmental information acquisition part 27, and a slave storage part 28.

The distance sensor 24 is arranged on a front side of the transport robot 20 and monitors the front of the transport robot 20 in a traveling direction. As illustrated in FIG. 2, in a specific example of Embodiment 1, the distance sensor 24, for example, includes two light detection and ranging (LiDAR) devices and is able to acquire distance information indicating a distance to an object existing within a monitoring area thereof. As an example, the monitoring area of the distance sensor 24 may include a range of up to about 120 degrees to the left and right from the front of the transport robot 20 in the traveling direction.

The LiDAR devices arranged in the transport robot 20 may be singular or plural in number. In the case of plural LiDAR devices, they may be arranged so as to monitor the rear as well. The type of the distance sensor 24 is not limited to LiDAR, and a sensor that acquires a distance image, such as a stereo camera or a time-of-flight (ToF) camera, or something based on another technique, may be used.

The slave storage part 28 is a recording device provided in the transport robot 20. The slave storage part 28 appropriately holds identification information of the transport robot 20, map information within the floor of the factory 100, various information necessary for the transport robot 20 to travel, a travel history, a control program of the transport robot 20 or the like.

The traveling mechanism 25 is a mechanism for the transport robot 20 to travel on a floor surface, which is operated under the control of the travel controller 22. In the outline drawing of the transport robot 20 in FIG. 2, a wheel 25A as a portion of the traveling mechanism 25 is illustrated.

The slave communication part 21 is a communication interface for the transport robot 20 to communicate with the control device 10. The slave communication part 21 receives an instruction for the control robot 20 from the control device 10. Since the communication with the transport robot 20 through the slave communication part 21 includes real-time distance information, the communication preferably has high speed, low latency, and multiple connections. Hence, it is preferable that the slave communication part 21 perform 5th generation (5G) communication or Wi-Fi 6 communication (Wi-Fi is a registered trademark) with a master communication part 11 of the control device 10. In the outline drawing of the transport robot 20 in FIG. 2, an antenna 21A as a portion of the slave communication part 21 is illustrated.

The travel controller 22 is a functional block that controls the traveling mechanism 25 to cause the transport robot 20 to travel in accordance with the instruction from the control device 10. The travel controller 22 also calculates odometry data based on operation information of each mechanism from the traveling mechanism 25, specifically, output of a rotary encoder of a motor. The odometry data is information relatively indicating a position of the transport robot 20 during or after traveling relative to the position of the transport robot 20 at a certain point in time.

The own position calculator 23 is a functional block that calculates an approximate position of the transport robot 20 according to the odometry data, and further calculates the own position information regarding an own position of the transport robot 20 from a comparison between the distance information and the map information of the vicinity of the approximate position. The calculated own position information is output to the control device 10 through the slave communication part 21.

The environment sensor 26 measures a predetermined environmental parameter around the transport robot 20. The environmental parameter includes, for example, at least one of temperature, humidity, illuminance, vibration, UV intensity, gas concentration, or air cleanliness (density of particles suspended in the air). The environment sensor 26 includes a measuring instrument (sensor) that measures at least one of these environmental parameters.

That is, the environment sensor 26 may include a thermometer, a hygrometer, an illuminometer, a vibrometer, an UV detector, a gas concentration detector that detects the concentration of oxygen gas such as ozone gas, nitride gas such as nitrogen oxide, or oxide gas such as carbon monoxide gas, a meter for the particles described above, or the like.

The environmental information acquisition part 27 acquires a measurement result of a measurement by the environment sensor 26. In accordance with the instruction from the control device 10, the environmental information acquisition part 27 transmits the acquired measurement result to the control device 10 through the slave communication part 21.

The transport robot 20 notifies the control device 10 through the slave communication part 21 of information about a unique state related to the transport robot 20 itself, for example, unique information containing the distance information and own position information. Furthermore, the unique information may contain information regarding an operation of the transport robot 20 or other internal states, such as, for example, a state of the operation of the transport robot 20, a loading state of the object to be transported, and a remaining battery capacity.

As a basic operation, the transport robot 20 carries out required transportation in the following manner in accordance with the instruction from the control device 10. When the travel controller 22 receives a transport instruction from the control device 10 through the slave communication part 21, by using the distance information, the own position information regarding the own position, and position information of the transport destination contained in the transport instruction, the travel controller 22 controls the traveling mechanism 25 to cause the transport robot 20 to travel to the transport destination. At that time, based on the odometry data from the travel controller 22 and the distance information from the distance sensor 24, the own position calculator 23 keeps updating the own position information.

<Configuration of Control Device 10>

As illustrated in FIG. 1, the control device 10 includes the master communication part 11, the transport instruction reception part 12, a slave monitoring part 13, the transport path determination part 14, an instruction generator 15, and the master storage part 16. The master communication part 11 is a communication interface for the control device 10 to communicate with the transport robot 20. The communication between the master communication part 11 and the slave communication part 21 may take the form of, for example, wireless communication.

The master storage part 16 is a recording device (storage part) provided in the control device 10. The master storage part 16 appropriately holds the map information within the floor of the factory 100, a control program of the control device 10, the unique information and operation log or the like of each transport robot 20.

The master storage part 16 stores the map information that contains map data, the map data containing obstacle information regarding an obstacle and environmental parameter information regarding an environmental parameter that may influence the object H to be transported within the floor (within the area) of the factory 100. The map data is, for example, appropriately transmitted from the host information processing system through the transport instruction reception part 12 and stored in the master storage part 16.

The obstacle information indicates an obstacle cost g corresponding to a degree of possibility of becoming an obstacle to a transportation operation by the transport robot 20 in association with a position within the floor. Specifically, the obstacle cost g is a value associated with, for example, ease of traveling of the transport robot 20, and the value increases as approaching the shelf 110. The value of the obstacle cost g may increase, for example, as a width of a path through which the transport robot 20 passes decreases or as a slope of the path increases. In a place within the area where the shelf 110 or the production facilities are installed and in other positions not designated as a passage of the transport robot 20, a very large value is set for the obstacle cost g.

The environmental parameter information contains information regarding the environmental parameter that may influence the object H to be transported that is associated with the position within the area. The environmental parameter may be, for example, at least one of temperature, humidity, illuminance, vibration, UV intensity, gas concentration, or air cleanliness. The environmental parameter information also contains a weighting coefficient value corresponding to the object H to be transported for each type of environmental parameter. An environmental influence cost fEnv for each position within the area is calculated according to the object H to be transported that is indicated by the transported object information and from the environmental parameter information, and details thereof will be described later.

The transport instruction reception part 12 includes a communication interface for the control device 10 to communicate with the host information processing system. The transport instruction reception part 12 receives the transport instruction which is the transport instruction regarding transportation of the object H to be transported and which contains the transported object information indicating the object H to be transported, transport source information indicating the transport source, and transport destination information indicating the transport destination.

The transported object information contains specific content of the object H to be transported, for example, information on the object H to be transported itself such as a storage container storing a semiconductor wafer in a specific state.

The transport source information contains information regarding a current arrangement position of the object H to be transported that is associated with the position within the area. The transport destination information contains information regarding a delivery position to which the object H to be transported is delivered that is associated with the position within the area.

The slave monitoring part 13 is a functional block that monitors the unique state of the transport robot 20 within the transport system 1. The slave monitoring part 13 monitors the unique state of the transport robot 20 at least based on the content of the unique information received by the master communication part 11 from the transport robot 20.

The transport path determination part 14 is a functional block that, based on the transport instruction received by the transport instruction reception part 12 and the map data stored by the master storage part 16, determines the transport path from the transport source to the transport destination of the object H to be transported by the transport robot 20. A specific transport path determination method of the transport path determination part 14 will be described later.

Based on the command from the host information processing system or the like, the instruction generator 15 assigns the transport robot 20 within the transport system 1 a job about transportation of the object H to be transported in consideration of the unique state of each transport robot 20 acquired by the slave monitoring part 13. The instruction generator 15 then further generates an instruction such as transportation for the transport robot 20 to which the job is assigned, and transmits the instruction through the master communication part 11. Here, the following examples may be mentioned of the job assignment in consideration of the unique state of the transport robot 20.

For example, when a certain object H to be transported is to be moved, the job is assigned to the transport robot 20 whose operation state is not in job execution and located near a place where the object H to be transported is placed. Alternatively, for transportation, the transport robot 20 with a sufficient remaining battery capacity is selected and assigned the job.

Furthermore, the instruction generator 15 gives the transport robot 20 through the master communication part 11 the transport instruction so that the transport robot 20 performs transportation in accordance with the transport path determined by the transport path determination part 14

In the above description, a case has been described where, based on the command from the host information processing system, the instruction generator 15 determines from a plurality of transport robots 20 one transport robot 20 to which a job is assigned, and causes the determined transport robot 20 to transport the object H to be transported in accordance with the transport path determined by the transport path determination part 14. However, the present embodiment is not limited thereto. For example, the transport instruction received by the transport instruction reception part 12 may contain a command designating the transport robot 20 that transports the object to be transported, and the designated transport robot 20 may transport the object H to be transported.

§3 Operation Example

<Operation of Transport System 1>

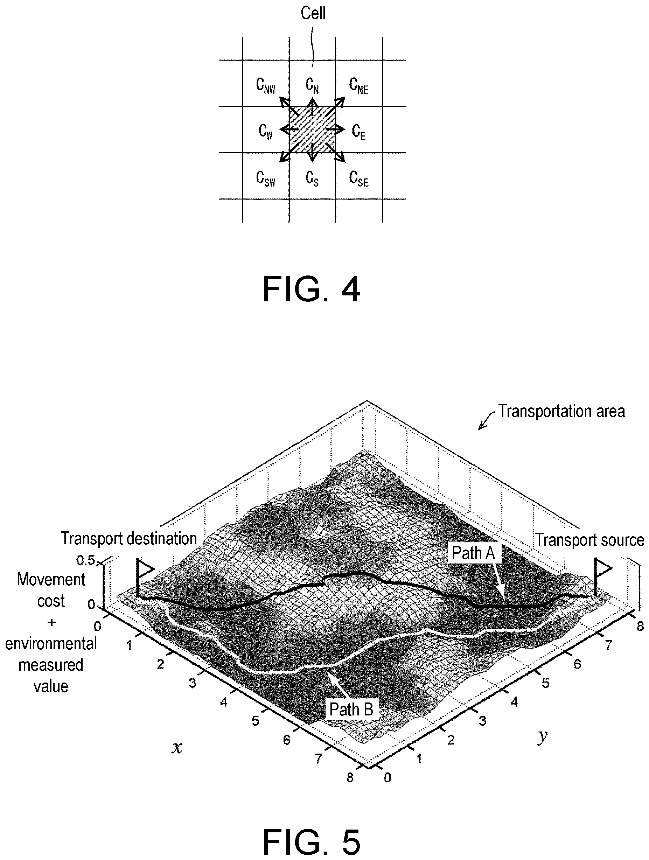

A characteristic operation of the control device 10 and the transport system 1 according to Embodiment 1 is described in detail with reference to FIG. 4 and FIG. 5. FIG. 4 illustrates a specific example of a movement direction of the transport robot of the transport system according to Embodiment 1 of the present disclosure. FIG. 5 illustrates a specific example of a transport path of the transport robot of the transport system according to Embodiment 1 of the present disclosure. In the following description, an operation is mainly described in which the transport path determination part 14 determines a transport path of one transport robot 20 after the instruction generator 15 assigns a transportation job to the transport robot 20.

When the transport instruction reception part 12 receives the transport instruction from the host information processing system, the transport path determination part 14 acquires, from the transport instruction, the transported object information indicating the object H to be transported, the transport source information indicating the transport source, and the transport destination information indicating the transport destination. The transport path determination part 14 determines the transport path of the object H to be transported by the transport robot 20 by using the acquired transported object information, transport source information and transport destination information, while referring to the map data stored in the master storage part 16.

Specifically, the transport path determination part 14 divides the area into a plurality of grids separated in a grid pattern. By repeating, starting from the grid to which the transport source belongs, a selection step of selecting whether to extend the transport path to any adjacent grid, the transport path determination part 14 determines the transport path from the transport source to the transport destination. Such a transport path search algorithm conforms to a search algorithm called A* (A-star).

In the selection step, the transport path determination part 14 calculates an evaluation cost f of the adjacent grid for each of the adjacent grid. The evaluation cost f includes the obstacle cost g of the adjacent grid based on the obstacle information contained in the map data, a movement cost h corresponding to a distance from the adjacent grid to the grid to which the transport destination belongs, and the environmental influence cost fEnv of the adjacent grid based on the environmental parameter of the environmental parameter information contained in the map data according to the object to be transported that is indicated by the transported object information.

The transport path determination part 14 determines that the transport path is to be extended to the adjacent grid where the evaluation cost f is minimum among the calculated evaluation cost f for each adjacent grid.

More specifically, when the transport robot 20 is located in a cell (grid) indicated by hatching in FIG. 4, the transport path determination part 14 determines to which adjacent grid the transport robot 20 to advance next to minimize the evaluation cost. The adjacent grid is in, for example, eight directions, including $C_E$ (east direction), $C_{SE}$ (southeast direction), Cs (south direction), Csw (southwest direction), Cw (west direction), $C_{NW}$ (northwest direction), $C_N$ (north direction), and $C_{NE}$ (northeast direction).

The transport path determination part 14 calculates the evaluation cost f using the following equation (1):

$$f=g+h+fEnv \qquad ---(1)$$

In the equation (1), g represents the movement cost (that is, the obstacle cost of the adjacent grid) of the transport robot 20 from a current position to a point of interest (adjacent grid), h represents the movement cost of the transport robot 20 from the point of interest to a destination, and fEnv represents an environmental measured value (environmental influence cost) contained in the environmental parameter information.

The movement cost h can be calculated using, for example, a known diagonal distance, Manhattan distance, or Euclidean distance.

For example, with respect to a designated object H to be transported, if there are three environmental parameters that influence the object H to be transported, the environmental measured value fEnv is expressed by the following equation (2):

$$fEnv=k(\alpha fE1+\beta fE2+\gamma fE3) \qquad ---(2)$$

In the equation (2), fE1, fE2, and fE3 represent mutually different environmental parameters that influence the designated object H to be transported and that are selected from, for example, temperature, humidity, illuminance, vibration, UV intensity, gas concentration, or air cleanliness. The number of environmental parameters included in the equation (2) is not limited to three, and it suffices if the equation (2) includes one or more environmental parameters.

$\alpha$, $\beta$, and $\gamma$ are weighting coefficients of 0 or more to 1 or less that are contained in the environmental parameter information. For each type of the object H to be transported, the environmental parameter information contains a weighting coefficient with respect to an environmental parameter that influences the object H to be transported. The environmental parameter and the weighting coefficient for calculating the environmental measured value fEnv are appropriately selected according to the designated object H to be transported, and are calculated as in, for example, the equation (2). k is a value of 0 or 1. With respect to the object H to be transported, the value of 0 is selected if environmental influence does not need to be considered, and the value of 1 is selected if environmental influence needs to be considered.

As a result, as illustrated in FIG. 5, the transport path determination part 14 finds, for example, path B as the transport path from the transport source to the transport destination of the transport robot 20 in a transportation area. That is, path B is a result of the determination made by the transport path determination part 14 that the transport path is to be extended to the adjacent grid where the evaluation cost f is minimum among the calculated evaluation cost f for each adjacent grid, as described above.

That is, for example, compared to path A illustrated in FIG. 5, path B indicates a transport path obtained by continuously connecting the grids with a low evaluation cost f among the adjacent grids. The transport path determination part 14 determines the found path B to be the transport path of the transport robot 20, notifies the instruction generator 15, and further instructs the transport robot 20 through the master communication part 11 to travel through the transport path.

In the above description, A* is exemplified as a predetermined search algorithm. However, the present embodiment is not limited thereto. For example, jump point search (JPS) algorithm, Dijkstra's algorithm, Theta*-Any-Angle, D* Lite, or RD-based path planning may be applied as a search algorithm.

As described above, in the control device 10 and the transport system 1 of the present embodiment, according to the object H to be transported that is indicated by the transported object information contained in the transport instruction, the transport path determination part 14 determines the transport path of the transport robot 20 in consideration of the environmental parameter that influences the object H to be transported. Hence, in the control device 10 and the transport system 1 of the present embodiment, environmental influence on the object H to be transported by the transport robot 20 can be suppressed.

As a specific example, the object H to be transported is a semiconductor wafer in a specific state during a manufacturing process. In the case where ozone may adversely influence the semiconductor wafer, it is desirable that the transport path of the object H to be transported avoid a region where the ozone concentration is high. In such a case, a weighting coefficient regarding the object H to be transported with respect to an environmental parameter indicating the ozone concentration is increased. Then, a place (grid) where the ozone concentration is high is calculated so that the environmental influence cost fEnv with respect to the semiconductor wafer (object H to be transported) is large, and a transport path passing through such a grid is prevented from being selected.

Accordingly, in the case of the transport path of the transport robot 20, the grid where the ozone concentration is high is avoided and the transport path is determined, and the semiconductor wafer sensitive to and easily influenced by the ozone concentration can be transported while suppressing the environmental influence.

In the control device 10 and the transport system 1 of the present embodiment, since the environmental parameter information is associated with the position of the object to be transported by the transport robot 20 within the area, the transport path determination part 14 is able to determine the transport path of the transport robot 20 while knowing the position within the area of an environmental parameter that influences the obj ect H to be transported. As a result, in the control device 10 and the transport system 1 of the present embodiment, the environmental influence on the object H to be transported by the transport robot 20 can be reliably suppressed.

In the control device 10 and the transport system 1 of the present embodiment, the environmental parameter includes at least one of temperature, humidity, illuminance, vibration, UV intensity, gas concentration, or air cleanliness. Accordingly, in the control device 10 and the transport system 1 of the present embodiment, the transport path determination part 14 is able to determine the transport path in consideration of the influence of at least one of temperature, humidity, illuminance, vibration, UV intensity, gas concentration, or air cleanliness on the object H to be transported by the transport robot 20.

In the control device 10 and the transport system 1 of the present embodiment, since the transport path determination part 14 calculates the evaluation cost of the adjacent grid for each adjacent grid and determines the transport path, the transport path determination part 14 is able to easily determine the transport path in which the environmental influence on the object H to be transported by the transport robot 20 is suppressed.

[Embodiment 2]

Another embodiment of the present disclosure is described below. For convenience of description, members having the same functions as those described in the above embodiment are denoted by the same reference numerals, and description thereof will not be repeated.

Embodiment 2 differs from Embodiment 1 mainly in that the transport path determination part 14 updates the map data based on a measurement result of the transport robot 20.

The control device 10 of Embodiment 2 instructs, through the master communication part 11, the transport robot 20 to transmit the measurement result of the environment sensor 26 acquired by the environmental information acquisition part 27 to the control device 10 side. When the control device 10 of Embodiment 2 acquires the above measurement result from the transport robot 20, the transport path determination part 14 updates the environmental parameter information in the map data stored in the master storage part 16 based on the acquired measurement result. Accordingly, in the control device 10 and the transport system 1 of the present embodiment, it is possible for the transport path determination part 14 to determine a relatively suitable transport path of the transport robot 20 in real time.

In addition to the above description, the obstacle information in the map data stored by the master storage part 16 may be appropriately updated with data from the transport robot 20.

Specifically, in the transport robot 20, after calculating the odometry data, the travel controller 22 acquires a posture and a position of the transport robot 20 with odometry error by using the calculated odometry data and the own position information from the own position calculator 23.

Next, the travel controller 22 acquires scan data of the distance sensor 24. Then, the travel controller 22 finds a normal distribution (for example, n=100) of particles using a predetermined state transition model.

Subsequently, in the posture and position of each particle, the travel controller 22 converts the scan data into a position, and, for each particle, generates local map data from the scan data after position conversion from a correspondence relationship of the map data accumulated in the past.

Next, the travel controller 22 compares the scan data from the posture and position of the transport robot 20 with the odometry error with the local map data for each particle, and calculates a likelihood value of each particle.

Subsequently, the travel controller 22 finds a product of the calculated likelihood value and a weight, and performs weight calculation of each particle.

Next, the travel controller 22 performs resampling on the particles. In this resampling, a sampling interval (W/N) is determined using, for example, a distribution of systematic sampling U (0, W/N). Here, W is the sum of the above weights, and N is the number of particles.

Subsequently, the travel controller 22 updates the particle with the maximum likelihood as the current position and posture of the transport robot 20, and updates the local map data to the map data of the entire area. Then, the travel controller 22 transmits the updated map data containing the obstacle information to the control device 10 through the slave communication part 21. At that time, the travel controller 22 associates a value of the environmental parameter acquired from the environment sensor 26 by the environmental information acquisition part 27 with the current position, and transmits the result to the control device 10. As a result, in the control device 10, the map data in which the obstacle information and the environmental parameter information are updated is changed and stored in the master storage part 16.

[Implementation Example by Software]

A functional block (particularly the transport path determination part 14) of the control device 10 may be implemented by a logic circuit (hardware) formed on an integrated circuit (IC chip) or the like or may be implemented by software.

In the latter case, the transport path determination part 14 includes a computer executing commands of a program being software that realizes each function. This computer includes, for example, one or more processors, and includes a computer-readable recording medium storing the program. In the computer, an object of the present disclosure is achieved by the processor reading the program from the recording medium and executing the program.

As the processor, a central processing unit (CPU), for example, can be used. As the recording medium, a "non-transitory tangible medium," for example, in addition to a read only memory (ROM), a tape, a disk, a card, a semiconductor memory, a programmable logic circuit or the like, can be used. A random access memory (RAM) or the like for developing the program may further be provided.

The program may be supplied to the computer via an arbitrary transmission medium (such as a communication network or broadcast waves) capable of transmitting the program. One aspect of the present invention may be realized in the form of a data signal embedded in a carrier wave, the data signal being embodied by the program by electronic transmission.

[Conclusion]

A control device according to one aspect of the present disclosure is a control device controlling a transport robot that travels within a predetermined area and transports an object to be transported. The control device includes: a master communication part, communicating with the transport robot; a storage part, storing map data containing obstacle information regarding an obstacle and environmental parameter information regarding an environmental parameter that may influence the object to be transported within the area; a transport instruction reception part, receiving a transport instruction regarding transportation of the object to be transported, the transport instruction containing transported object information indicating the object to be transported, transport source information indicating a transport source, and transport destination information indicating a transport destination; a transport path determination part, determining a transport path from the transport source to the transport destination of the object to be transported by the transport robot based on the transport instruction and the map data; and an instruction generator, giving the transport robot through the master communication part the transport instruction so that the transport robot transports the object to be transported in accordance with the transport path determined by the transport path determination part. The transport path determination part is configured to, according to the object to be transported that is indicated by the transported object information contained in the transport instruction, determine the transport path in consideration of the environmental parameter that influences the object to be transported.

According to the above configuration, according to the object to be transported that is indicated by the transported object information contained in the transport instruction, the transport path determination part determines the transport path of the transport robot in consideration of the environmental parameter that influences the object to be transported. Hence, environmental influence on the object to be transported by the transport robot can be suppressed.

In the control device according to the above aspect, the environmental parameter information may contain information regarding the environmental parameter that may influence the object to be transported that is associated with a position within the area.

According to the above configuration, since the transport path determination part is able to determine the transport path of the transport robot while knowing the position within the area of the environmental parameter that influences the object to be transported, the environmental influence on the object to be transported by the transport robot can be reliably suppressed.

In the control device according to the above aspect, the transport path determination part may update the map data stored by the storage part based on a measurement result by the transport robot about the environmental parameter acquired from the transport robot through the master communication part.

According to the above configuration, it is possible for the transport path determination part to determine a relatively suitable transport path of the transport robot in real time.

In the control device according to the above aspect, the environmental parameter may include at least one of temperature, humidity, illuminance, vibration, UV intensity, gas concentration, or air cleanliness.

According to the above configuration, the transport path determination part is able to determine the transport path in consideration of the influence of at least one of temperature, humidity, illuminance, vibration, UV intensity, gas concentration, or air cleanliness on the object to be transported by the transport robot.

In the control device according to the above aspect, the transport path determination part divides the area into a plurality of grids separated in a grid pattern. By repeating, starting from the grid to which the transport source belongs, a selection step of selecting whether to extend the transport path to any adjacent grid, the transport path determination part determines the transport path from the transport source to the transport destination. In the selection step, an evaluation cost of the adjacent grid may be calculated for each of the adjacent grid, the evaluation cost including an obstacle cost of the adjacent grid based on the obstacle information, a movement cost corresponding to a distance from the adjacent grid to the grid to which the transport destination belongs, and an environmental influence cost of the adjacent grid based on the environmental parameter according to the object to be transported that is indicated by the transported object information. It may be determined that the transport path is to be extended to the adjacent grid where the evaluation cost is minimum among the calculated evaluation cost.

According to the above configuration, the transport path determination part is able to easily determine the transport path in which environmental influence on the object to be transported by the transport robot is suppressed.

A transport system according to one aspect of the present disclosure includes the above control device, and a transport robot provided with a traveling mechanism, a distance sensor that acquires distance information indicating a distance to an object existing within a monitoring area, an own position calculator that calculates own position information, a travel controller that controls the traveling mechanism using the distance information from the distance sensor and the own position information from the own position calculator, and a slave communication part that performs the communication.

According to the above configuration, the transport system can be configured in which environmental influence on an object to be transported by the transport robot can be suppressed.

In the transport system according to the above aspect, the transport robot may further include an environment sensor that measures a predetermined environmental parameter around the transport robot.

According to the above configuration, it is possible for the transport path determination part to determine a relatively suitable transport path of the transport robot in real time.

The present disclosure is not limited to the embodiments described above, and may be modified in various ways within the scope of the claims. An embodiment derived from a proper combination of technical means disclosed in respective different embodiments is also encompassed in the technical scope of the present disclosure.

Description of Reference Numerals

1: transport system
10: control device
12: transport instruction reception part
14: transport path determination part
15: instruction generator
20: transport robot
22: travel controller
23: own position calculator
24: distance sensor
25: traveling mechanism

## Claims

1. A control device, controlling a transport robot that travels within a predetermined area and transports an object to be transported, wherein the control device comprises:

   a master communication part, communicating with the transport robot;
   a storage part, storing map data containing obstacle information regarding an obstacle and environmental parameter information regarding an environmental parameter that may influence the object to be transported within the area;
   a transport instruction reception part, receiving a transport instruction regarding transportation of the object to be transported, the transport instruction containing transported object information indicating the object to be transported, transport source information indicating a transport source, and transport destination information indicating a transport destination;
   a transport path determination part, determining a transport path from the transport source to the transport destination of the object to be transported by the transport robot based on the transport instruction and the map data; and
   an instruction generator, giving the transport robot through the master communication part the transport instruction so that the transport robot transports the object to be transported in accordance with the transport path determined by the transport path determination part,
   wherein,
   according to the object to be transported that is indicated by the transported object information contained in the transport instruction, the transport path determination part determines the transport path in consideration of the environmental parameter that influences the object to be transported.

2. The control device according to claim 1, wherein the environmental parameter information contains information regarding an environmental parameter that may influence the object to be transported that is associated with a position within the area.

3. The control device according to claim 1 or 2, wherein the transport path determination part updates the map data stored by the storage part based on a measurement result by the transport robot about the environmental parameter acquired from the transport robot through the master communication part.

4. The control device according to any one of claims 1 to 3, wherein
   the environmental parameter comprises at least one of temperature, humidity, illuminance, vibration, UV intensity, gas concentration, or air cleanliness.

5. The control device according to any one of claims 1 to 4, wherein

the transport path determination part divides the area into a plurality of grids separated in a grid pattern;

by repeating, starting from the grid to which the transport source belongs, a selection step of selecting whether to extend the transport path to any adjacent grid, the transport path determination part determines the transport path from the transport source to the transport destination; and

in the selection step, the transport path determination part calculates an evaluation cost of the adjacent grid for each of the adjacent grid, and determines that the transport path is to be extended to the adjacent grid where the evaluation cost is minimum among the calculated evaluation cost, the evaluation cost comprising an obstacle cost of the adjacent grid based on the obstacle information, a movement cost corresponding to a distance from the adjacent grid to the grid to which the transport destination belongs, and an environmental influence cost of the adjacent grid based on the environmental parameter according to the object to be transported that is indicated by the transported object information.

6. A transport system comprising:

a transport robot, provided with a traveling mechanism, a distance sensor that acquires distance information indicating a distance to an object existing within a monitoring area, an own position calculator that calculates own position information, a travel controller that controls the traveling mechanism using the distance information from the distance sensor and the own position information from the own position calculator, and a slave communication part that performs the communication; and

the control device according to any one of claims 1 to 5.

7. The transport system according to claim 6, wherein the transport robot further comprises an environment sensor that measures a predetermined environmental parameter around the transport robot.

**Control device** ⌐10

**Master communication part** ⌐11

**Transport instruction reception part** ⌐12

**Slave monitoring part** ⌐13

**Transport path determination part** ⌐14

**Instruction generator** ⌐15

**Master storage part** ⌐16

**Transport robot** ⌐20

**Slave communication part** ⌐21

**Travel controller** ⌐22

**Own position calculator** ⌐23

**Distance sensor** ⌐24

**Traveling mechanism** ⌐25

**Environment sensor** ⌐26

**Environmental information acquisition part** ⌐27

**Slave storage part** ⌐28

**Transport robot** ⌐20

**Transport robot** ⌐20

⁞

# FIG. 1

FIG. 2

FIG. 3

Cell

$C_{NW}$ $C_N$ $C_{NE}$

$C_W$ $C_E$

$C_{SW}$ $C_S$ $C_{SE}$

# FIG. 4

Transportation area

Transport destination

Transport source

Path A

Movement
cost
+
environmental
measured
value

0.5

0

Path B

$x$

$y$

# FIG. 5

## INTERNATIONAL SEARCH REPORT

International application No.

**PCT/JP2021/046661**

**A.    CLASSIFICATION OF SUBJECT MATTER**

*G05D 1/02*(2020.01)i
FI:    G05D1/02 Y; G05D1/02 H

According to International Patent Classification (IPC) or to both national classification and IPC

**B.    FIELDS SEARCHED**

Minimum documentation searched (classification system followed by classification symbols)

G05D1/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2017-10234 A (HITACHI, LTD.) 12 January 2017 (2017-01-12) paragraphs [0012]-[0040], fig. 1-7 | 1-7 |
| A | JP 11-141135 A (MITSUBISHI HEAVY IND., LTD.) 25 May 1999 (1999-05-25) entire text, all drawings | 1-7 |

☐ Further documents are listed in the continuation of Box C.         ☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **02 February 2022** | **01 March 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2021/046661**

| Patent document cited in search report | | | Publication date (day/month/year) | Patent family member(s) | Publication date (day/month/year) |
|---|---|---|---|---|---|
| JP | 2017-10234 | A | 12 January 2017 | US 2016/0370802 A1 paragraphs [0019]-[0047], fig. 1-7 | |
| JP | 11-141135 | A | 25 May 1999 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013225253 A